# EUROPEAN PATENT SPECIFICATION

(11) **EP 4 350 263 B1**
(45) Date of publication and mention of the grant of the patent: **27.05.2026**
(21) Application number: 22837680.2
(22) Date of filing: 05.07.2022
(51) Int. Cl.: F26B 11/14, F26B 5/04, F26B 25/04, F26B 3/24

(54) **WASHING/DRYING APPARATUS AND WASHING/DRYING METHOD**
WASCHTROCKNER UND WASCH-/TROCKENVERFAHREN
APPAREIL DE LAVAGE/SÉCHAGE ET PROCÉDÉ DE LAVAGE/SÉCHAGE

(30) Priority: 09.07.2021 JP 2021114345
(43) Date of publication of application: 10.04.2024
(73) Proprietor: DAIKIN INDUSTRIES, LTD., Osaka 530-0001 (JP)
(72) Inventor: YABU, Tadahiro, Osaka-shi, Osaka 530-8323 (JP); NAKAO, Yuki, Osaka-shi, Osaka 530-8323 (JP)
(74) Representative: Hoffmann Eitle
(86) International application number: PCT/JP2022/026741
(87) International publication number: WO 2023/282266

(56) References cited:
- CN-A- 111 821 732
- CN-A- 112 717 507
- DE-U1- 8 816 899
- JP-A- 2001 205 067
- JP-A- 2001 205 067
- JP-A- 2002 156 788
- JP-A- 2004 148 195
- JP-A- 2013 151 621
- JP-A- H0 929 011
- JP-A- S61 107 910
- JP-A- S61 107 910
- JP-U- S5 747 230
- JP-U- S5 747 230
- US-A1- 2004 136 263
- US-A1- 2004 136 263

## Description

### Technical Field

The present disclosure relates to a washing and drying apparatus for washing and drying a treatment target which is powder and made of a polymeric organic compound and a method for washing and drying the treatment target which is powder and made of the polymeric organic compound.

### Background Art

A washing apparatus and a drying apparatus have conventionally been used separately for washing and drying a treatment target made of a polymerizable organic compound.

The washing apparatus has a container main body and a stirring blade, holds a treatment target and water in the container main body, and washes the treatment target with water by rotation of the stirring blade. The drying apparatus has a rotatable container main body, holds the treatment target after being washed in the container main body, and dries the treatment target while rotating the container main body (JP 61-130893 U1).

Other washing and drying apparatus are known from JP 2001-205067 A, JP 2002-156788 A, JP 2013-151621 A, US 2004/0136263 A1, JP S61 107910 A, DE 88 16 899 U1, JP S57 47230 U, CN 112 717 507 A and CN 111 821 732 A.

### Summary of Invention

### Technical Problem

However, the separate use of the washing apparatus and the drying apparatus as in the conventional case requires a large space for placing the washing apparatus and the drying apparatus, and increases a workload for moving the treatment target from the washing apparatus to the drying apparatus.

Therefore, an object of the present disclosure is to provide a washing and drying apparatus and a washing and drying method that can save space for placing the apparatus and reduce a workload.

### Solution to Problem

The invention is defined in the independent claims. Distinct embodiments are defined in the dependent claims. In order to solve the problems, a washing and drying apparatus which is a first aspect of the present disclosure is an apparatus capable of washing a treatment target which is powder and made of a polymeric organic compound (e.g., consist of a polymeric organic compound) with a washing liquid and drying the treatment target. The washing and drying apparatus includes the features of claim 1.

Preferably, a second aspect is the washing and drying apparatus of the first aspect, in which the filters are capable of separately filtering the washing liquid and the treatment target of more than or equal to 50 µm.

Preferably, a third aspect is the washing and drying apparatus of the first or second aspect, in which the stirring blade has a shaft and a fin wound around the shaft so as to form a continuous helix along the shaft.

Preferably, a fourth aspect is the washing and drying apparatus of the first or second aspect, in which the stirring blade has a shaft and a plurality of fins wound around the shaft so as to form a discontinuous helix along the shaft.

Preferably, a fifth aspect is the washing and drying apparatus of any one of the first to fourth aspects, in which the stirring blade is capable of revolving while rotating.

Preferably, a sixth aspect is the washing and drying apparatus of any one of the first to fifth aspects, further including a decompression device capable of decompressing the inside of the container.

Preferably, a seventh aspect is the washing and drying apparatus of any one of the first to sixth aspects, in which the container is capable of retaining the washing liquid at the time of washing.

Preferably, an eighth aspect is the washing and drying apparatus of any one of the first to sixth aspects, in which the container has a spray nozzle communicating with the washing liquid supply tube and capable of spraying the washing liquid.

Preferably, a ninth aspect is the washing and drying apparatus of any one of the first to eighth aspects, in which the treatment target is made of resin.

Preferably, a tenth aspect is the washing and drying apparatus of any one of the first to eighth aspects, in which the treatment target is made of fluororesin.

Preferably, an eleventh aspect is the washing and drying apparatus of any one of the first to tenth aspects, in which the treatment target has an average particle size of more than or equal to 20 µm.

Preferably, a twelfth aspect is the washing and drying apparatus of any one of the first to eleventh aspect, in which the filters are arranged in a region closer to an outer circumference of the bottom part.

Preferably, a thirteenth aspect is the washing and drying apparatus of the twelfth aspect, in which part of the heater is arranged in a region closer to a center of the bottom part.

Preferably, a fourteenth aspect is the washing and drying apparatus of any one of the first to thirteenth aspects, in which an inner surface of the bottom part at an inner side of the container main body is flat, and the filter is provided on the inner surface.

Preferably, a seventeenth aspect is the washing and drying apparatus of the fifteenth or sixteenth aspect, in which the top part has a treatment target supply hole communicating with the treatment target supply tube and a washing liquid supply hole communicating with the washing liquid supply tube, and an opening of the treatment target supply hole at the inner side of the container main body and an opening of the washing liquid supply hole at the inner side of the container main body are located between any washing liquid discharge holes adjacent to each other in the circumferential direction among the washing liquid discharge holes when viewed in the direction along the central axis.

Preferably, a eighteenth aspect is the washing and drying apparatus of any one of the fifteenth to seventeenth aspects, in which
an inner circumferential trajectory of the fin of the stirring blade traced by rotation of the stirring blade crosses the treatment target discharge hole and the washing liquid discharge holes when viewed in the direction along the central axis.

A method for washing and drying a treatment target being powdery and made of a polymeric organic compound is defined in claim 17.

### Advantageous Effects of Invention

The washing and drying apparatus and the washing and drying method according to an aspect of the present disclosure can save space for placing the apparatus and reduce a workload.

### Brief Description of Drawings

[Figure 1] Figure 1 is a simplified configuration diagram showing a first embodiment of a washing and drying apparatus.
[Figure 2] Figure 2 is a top view of the washing and drying apparatus.
[Figure 3] Figure 3 is an XY sectional view of the washing and drying apparatus when viewed from above.
[Figure 4] Figure 4 is an XY sectional view of the washing and drying apparatus when viewed from above.
[Figure 5] Figure 5 is a schematic configuration diagram of a stirring blade showing a second embodiment of the washing and drying apparatus.
[Figure 6] Figure 6 is a top view showing a third embodiment of the washing and drying apparatus.
[Figure 7] Figure 7 is an XY sectional view of Example 2 of the washing and drying apparatus when viewed from above.

### Description of Embodiments

Hereinafter, a washing and drying apparatus and a washing and drying method according to an aspect of the present disclosure will be described in detail in accordance with illustrated embodiments. Note that the drawings may partially include schematic ones, and actual dimensions and proportions are not reflected in some cases.

### <First Embodiment>

### [Schematic Configuration]

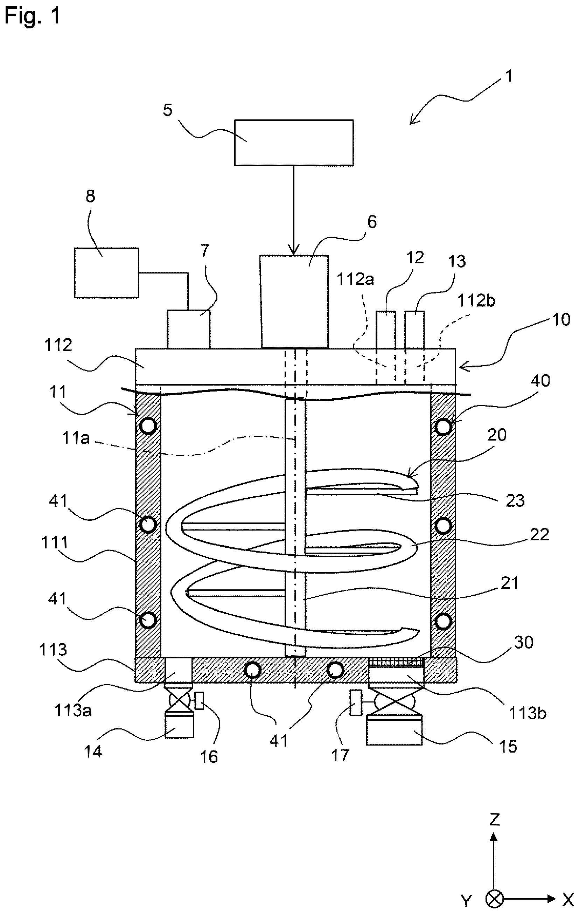

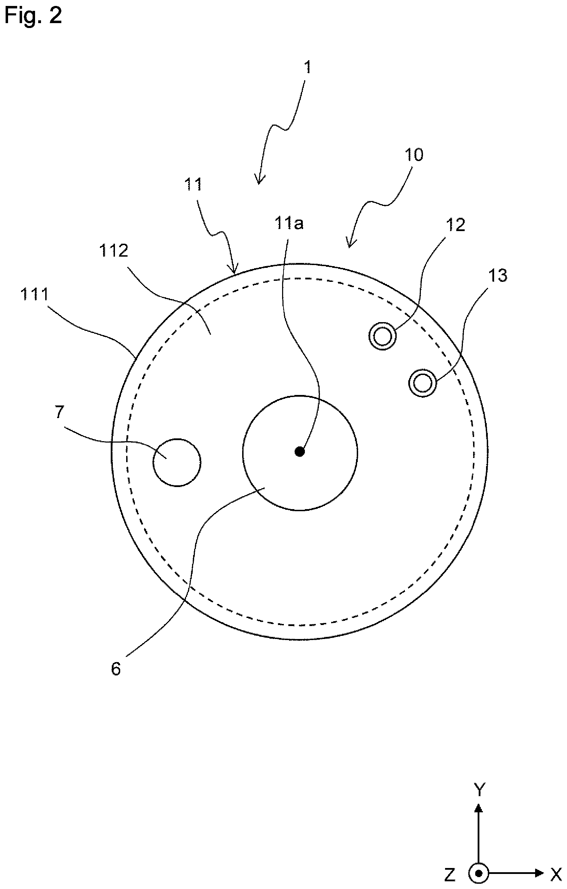

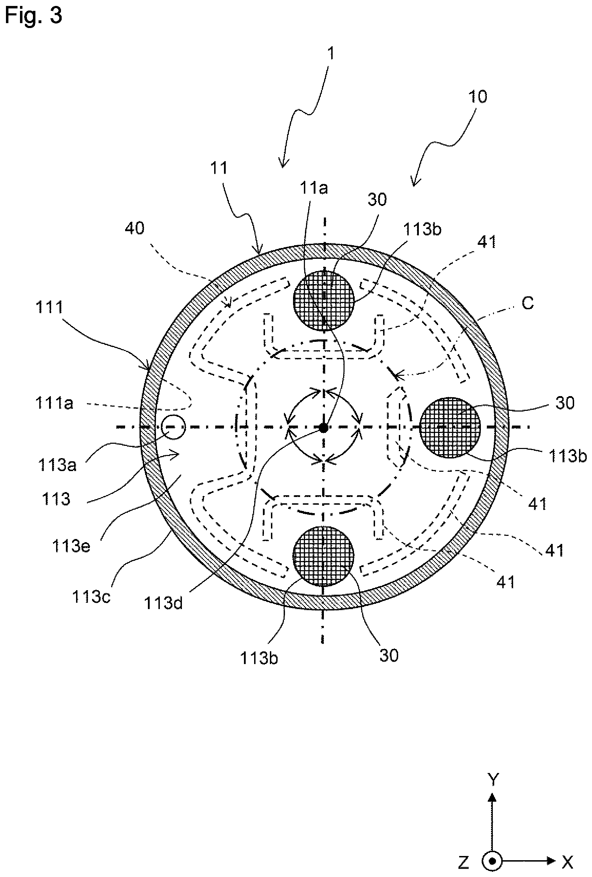

Figure 1 is a simplified configuration diagram showing a first embodiment of a washing and drying apparatus. Figure 2 is a top view of the washing and drying apparatus. Figure 3 is an XY sectional view of the washing and drying apparatus when viewed from above.

Note that as shown in the drawings, the vertical direction (a height direction) when a washing and drying apparatus 1 is placed is referred to as a Z-direction, and the horizontal direction is referred to as an X-direction and a Y-direction. The X-direction, the Y-direction, and the Z-direction are directions perpendicular to one another, and constitute the right-handed system when arrayed in the order to X, Y, and Z. The forward direction of the Z-direction is referred to as an upper direction, and the reverse direction of the Z-direction is referred to as a lower direction.

As shown in Figure 1, Figure 2, and Figure 3, the washing and drying apparatus 1 is an apparatus capable of washing a treatment target which is powder and made of a polymeric organic compound with a washing liquid and drying the treatment target. The washing and drying apparatus 1 includes a container 10, a stirring blade 20 arranged inside the container 10, a filter 30 arranged in the container 10, a heater 40 arranged in the container 10, and a control device 5 that controls the stirring blade 20 and the heater 40.

The container 10 has a container main body 11, a treatment target supply tube 12 attached to the container main body 11, a washing liquid supply tube 13, a treatment target discharge tube 14, and a washing liquid discharge tube 15. The treatment target supply tube 12 communicates with the inside of the container main body 11 and is capable of supplying the treatment target. The washing liquid supply tube 13 communicates with the inside of the container main body 11 and is capable of supplying the washing liquid. The treatment target discharge tube 14 communicates with the inside of the container main body 11 and is capable of discharging the treatment target. The washing liquid discharge tube 15 communicates with the inside of the container main body 11 and is capable of discharging the washing liquid.

The stirring blade 20 is capable of rotating by driving of a motor 6 attached to the container main body 11. The stirring blade 20 is capable of stirring the treatment target and the washing liquid at the time of washing the treatment target, and is capable of stirring the treatment target at the time of drying the treatment target.

The filter 30 is provided for the container main body 11 and located at the upstream side of the washing liquid discharge tube 15. The filter 30 is capable of separately filtering the treatment target and the washing liquid.

The heater 40 is capable of heating the inside of the container 10. The heater 40 is capable of heating the treatment target at the time of drying the treatment target.

The control device 5 rotates the stirring blade 20 at the times of washing and drying the treatment target. Specifically describing, the control device 5 drives the motor 6 to rotate the stirring blade 20. The control device 5 also actuates the heater 40 at the time of drying the treatment target.

The above-described configuration enables the treatment target to be supplied from the treatment target supply tube 12 into the container main body 11 and the washing liquid to be supplied from the washing liquid supply tube 13 into the container main body 11. Then, the treatment target can be washed with the washing liquid while the stirring blade 20 is being rotated. When the washing liquid is discharged (at the time of dehydration), the treatment target and the washing liquid can be filtered separately by the filter 30. Specifically describing, the treatment target can be discharged from the treatment target discharge tube 14, and the washing liquid can be discharged from the washing liquid discharge tube 15. Thereafter, the heater 40 can be actuated while the stirring blade 20 is being rotated to dry the treatment target.

Consequently, a washing step and a drying step can be performed with a single apparatus without the need to use a washing apparatus and a drying apparatus separately, which can save the space for placing the apparatus. In addition, since the washing step and the drying step can be performed with a single apparatus, there is no need to move the treatment target from a washing apparatus to a drying apparatus, which can reduce a workload.

It is also conceivable to perform the washing step and the drying step with a conventionally-used washing apparatus; however, the washing step requires water (the washing liquid) and the treatment target to be distributed as uniformly as possible, so that the revolutions per minute of the stirring blade need to be increased. On the other hand, in the drying step, only the treatment target is stirred with no water contained, which may increase resistance against the treatment target and may apply a load on the stirring blade. Thus, the revolutions per minute of the stirring blade need to be reduced. Consequently, it is difficult to perform the drying step with the conventionally-used washing apparatus.

Herein, having studied earnestly and paying attention to the fact that a treatment target which is powder and made of a polymeric organic compound is readily isolated from water, the inventor of the present application has found out that the treatment target can be washed by stirring both the treatment target and water without uniformly distributing the treatment target and water. That is, the inventor of the present application has found out that it is not necessary to increase the revolutions per minute of the stirring blade for uniform distribution and the treatment target can be washed even at lower revolutions per minute of the stirring blade.

Paying attention to the fact that particularly in a case in which the treatment target is made of fluororesin, the treatment target has high water-repellency and the powdery treatment target and water are isolated completely in a stationary state, the inventor of the present application has found out that the treatment target can be washed by thus stirring both water and the powdery treatment target and bringing water and the powdery treatment target into contact only at the solid-liquid interface.

As described above, the inventor of the present application has found out that the treatment target which is powder and made of a polymeric organic compound can be washed even at low revolutions per minute of the stirring blade at the time of drying, and has invented the washing and drying apparatus of the invention of the present application capable of performing the washing step and the drying step.

### [Preferable Configuration of Each Component]

### (Treatment Target and Washing Liquid)

The treatment target is made of resin, for example. Thus, the treatment target is readily isolated from water and can be washed even at lower revolutions per minute of the stirring blade 20. Consequently, a load on the stirring blade 20 at the time of washing can be reduced.

The treatment target is preferably made of fluororesin. Since fluororesin has high water-repellency, the treatment target is more readily isolated from water and can be washed even at still lower revolutions per minute of the stirring blade 20. Consequently, a load on the stirring blade 20 at the time of washing can be reduced further.

The treatment target has an average particle size of more than or equal to 20 µm, for example. Herein, the average particle size indicates a particle size at an integrated value of 50% in a particle size distribution obtained by the laser diffraction method.

The washing liquid is water, for example. Note that the washing liquid may be an organic solvent such as ethyl alcohol or methyl alcohol.

In a state in which the treatment target is dried, the washing liquid contained in the treatment target after being dried has a water content of 0.2%, preferably less than or equal to 0.1%.

### (Container 10)

The container main body 11 has a cylindrical sidewall part 111, a top part 112 attached to a first opening at the upper side of the sidewall part 111, and a bottom part 113 attached to a second opening at the lower side of the sidewall part 111. The sidewall part 111 has a cylindrical shape, for example. The top part 112 and the bottom part 113 have a disc shape, for example.

A central axis 11a of the container main body 11 conforms to a central axis of the cylindrical sidewall part 111. A center of the top part 112 crosses the central axis 11a of the container main body 11. A center 113d of the bottom part 113 crosses the central axis 11a of the container main body 11.

The top part 112 has a treatment target supply hole 112a communicating with the treatment target supply tube 12 and a washing liquid supply hole 112b communicating with the washing liquid supply tube 13. One each of the treatment target supply hole 112a and the washing liquid supply hole 112b are provided.

The bottom part 113 has a treatment target discharge hole 113a communicating with the treatment target discharge tube 14 and a washing liquid discharge hole 113b communicating with the washing liquid discharge tube 15. One treatment target discharge hole 113a and three washing liquid discharge holes 113b are provided. Each of the washing liquid discharge holes 113b is provided with the filter 30. The provision of the treatment target discharge hole 113a and the washing liquid discharge holes 113b in the bottom part 113 thus enables both the washing liquid and the treatment target to be discharged with high efficiency by gravity.

The treatment target supply tube 12 and the washing liquid supply tube 13 are attached to the top part 112. One each of the treatment target supply tube 12 and the washing liquid supply tube 13 are provided.

The treatment target discharge tube 14 and the washing liquid discharge tube 15 are attached to the bottom part 113. One treatment target discharge tube 14 and three washing liquid discharge tubes 15 are provided. A first sluice valve 16 is attached to the treatment target discharge tube 14, and a second sluice valve 17 is attached to the washing liquid discharge tube 15.

The container 10 is preferably provided with a decompression device 8 capable of decompressing the inside of the container 10. Specifically describing, the decompression device 8 is connected to the container main body 11 via a bag filter 7 attached to the top part 112. The bag filter 7 can prevent the treatment target from being absorbed into the decompression device 8 when the decompression device 8 decompresses the inside of the container 10. The above-described configuration enables the inside of the container 10 to be decompressed by the decompression device 8 at the time of drying to dry the treatment target at low temperature.

The container 10 is capable of retaining the washing liquid at the time of washing. Specifically describing, at the time of washing, the first and second sluice valves 16 and 17 are closed and the washing liquid is supplied from the washing liquid supply tube 13 into the container main body 11, so that the washing liquid can be retained in the container main body 11. The above-described configuration enables the washing liquid to be stored in the container 10 to wash the treatment target, which can reduce the quantity of the washing liquid as compared with a case of washing the treatment target while spraying the washing liquid.

### (Stirring Blade 20)

The stirring blade 20 has a shaft 21 and a fin 22 wound around the shaft 21 so as to form a continuous helix along the shaft 21. Specifically describing, a plurality of supports 23 extending perpendicularly to a shaft center of the shaft 21 are attached to the shaft 21, and the fin 22 is supported by the supports 23. The stirring blade 20 is attached to the container main body 11 such that the shaft center of the shaft 21 conforms to the central axis 11a of the container main body 11. The stirring blade 20 rotates around the central axis 11a. The above-described configuration can increase the degree of stirring with the stirring blade 20 because the fin 22 forms a continuous helix.

Note that the stirring blade may be capable of revolving while rotating. Specifically describing, the stirring blade may be attached to the container main body 11 such that the shaft center of the shaft is offset from the central axis 11a of the container main body 11, and the stirring blade may revolve around the central axis 11a while rotating around the shaft center of the shaft 21. The above-described configuration enables more reliable stirring with the stirring blade 20.

### (Filters 30)

The filters 30 are attached to openings of the washing liquid discharge holes 113b at the inner side of the container main body 11. Preferably, the filters 30 are capable of separately filtering the washing liquid and the treatment target of more than or equal to 50 µm. The above-described configuration enables the washing liquid and the treatment target to be filtered separately. The filters 30 are composed of metal such as stainless steel or resin such as polyester or polyethylene, for example. Adjustment of a mesh size of the filters 30 enables treatment targets having various sizes to be filtered separately.

### (Heater 40)

The heater 40 is provided in the sidewall part 111 and the bottom part 112 of the container main body 11. Specifically describing, the heater 40 has a plurality of pipes 41, and the plurality of pipes 41 are buried in each of the sidewall part 111 and the bottom part 112. The inside of the container main body 11 can be heated by flowing a heating medium such as steam, oil, or warm water through the pipes 41.

Note that the pipes 41 may be replaced by halved pipes, which can reduce cost. Alternatively, the pipes 41 may be replaced by an electric heater, which enables a more compact arrangement.

### (Control Device 5)

The control device 5 rotates the stirring blade 20 at the time of washing the treatment target, and actuates the heater 40 while rotating the stirring blade 20 at the time of drying the treatment target. Preferably, the control device 5 actuates the heater 40 at the time of washing the treatment target. The temperature rise at the time of washing can thus improve a washing effect.

The control device 5 equalizes the revolutions per minute of the stirring blade 20 at the time of washing and the revolutions per minute of the stirring blade 20 at the time of drying. For example, the revolutions per minute of the stirring blade 20 are 5 to 100 rpm, preferably 30 to 100 rpm.

Note that the control device 5 may make the revolutions per minute of the stirring blade 20 at the time of drying the treatment target lower than the revolutions per minute of the stirring blade 20 at the time of washing the treatment target. For example, the revolutions per minute of the stirring blade 20 at the time of drying are 30 rpm, and the revolutions per minute of the stirring blade 20 at the time of washing are 50 to 100 rpm. Since the treatment target alone is stirred at the time of drying without the washing liquid contained, the resistance against the treatment target increases; however, the load to be applied to the stirring blade 20 can be reduced further by reducing the revolutions per minute of the stirring blade 20.

### (Mutual Positional Relationship among Respective Components)

As shown in Figure 3, the filters 30 are arranged in a region closer to the outer circumference 113c of the bottom part 113. The region closer to the outer circumference 113c of the bottom part 113 refers to a region closer to the outer circumference 113c of the bottom part 113 than to the half of the distance from the center 113d of the bottom part 113 to an inner surface 111a of the sidewall part 111 when viewed in the direction along the central axis 11a of the container main body 11. The inner surface 111a of the sidewall part 111 faces an internal space of the container main body 11.

In Figure 3, the position of the half of the distance from the center 113d of the bottom part 113 (the central axis 11a of the container main body 11) to the inner surface 111a of the sidewall part 111 is indicated by an imaginary circle C. That is, the region closer to the outer circumference 113c of the bottom part 113 is a region closer to the outer circumference 113c than to the imaginary circle C.

The expression that the filters 30 are arranged in the region closer to the outer circumference 113c of the bottom part 113 includes not only a case in which all of the filters 30 are arranged in the region closer to the outer circumference 113c of the bottom part 113, but also a case in which half or more of the filters 30 are arranged in the region closer to the outer circumference 113c of the bottom part 113. In the present embodiment, all of the filters 30 are arranged in the region closer to the outer circumference 113c of the bottom part 113.

When discharging the washing liquid, the above-described configuration enables the washing liquid to be splashed to the region closer to the outer circumference 113c of the bottom part 113 by centrifugal force of the stirring blade 20 by rotating the stirring blade 20, and enables the treatment target and the washing liquid to be filtered separately with high efficiency by the filters 30.

As shown in Figure 3, part of the heater 40 is arranged in a region closer to the center 113d of the bottom part 113. Specifically describing, some of the pipes 41 are arranged in the region closer to the center 113d of the bottom part 113. The region closer to the center 113d of the bottom part 113 refers to a region closer to the center 113d of the bottom part 113 than to the half of the distance from the center of the bottom part 113 to the inner surface 111a of the sidewall part 111 when viewed in the direction along the central axis 11a of the container main body 11. That is, the region closer to the center 113d of the bottom part 113 is a region closer to the center 113d than to the imaginary circle C.

With the above-described configuration, part of the heater 40 is arranged in the region closer to the center 113d of the bottom part 113, so that the vicinity of the central axis 11a of the container main body 11, which is difficult to heat, can be heated effectively at the time of drying to dry the treatment target effectively. As described above, adjustment of the arrangement of the filters 30 and the heater 40 at the bottom part 113 enables both discharging of the washing liquid at the time of washing and drying of the treatment target at the time of drying to be performed with high efficiency.

As shown in Figure 3, an inner surface 113e of the bottom part 113 at the inner side of the container main body 11 is flat, and the filters 30 are provided on the inner surface 113e. The inner surface 113e of the bottom part 113 faces the internal space of the container main body 11. Preferably, the filters 30 are located flush with the inner surface 113e. The above-described configuration enables the area of the filters 30 to be ensured widely while maintaining the filters 30 flatly because the inner surface 113e of the bottom part 113 is flat.

As shown in Figure 3, the treatment target discharge hole 113a and the washing liquid discharge holes 113b are arranged in the circumferential direction around the central axis 11a when viewed in the direction along the central axis 11a of the container main body 11. Specifically describing, an opening of the treatment target discharge hole 113a at the inner side of the container main body 11 and openings of the washing liquid discharge holes 113b at the inner side of the container main body 11 are arranged in the circumferential direction. In other words, the filters 30 and the treatment target discharge hole 113a are arranged in the circumferential direction. The above-described configuration enables the treatment target discharge hole 113a and the washing liquid discharge holes 113b to be arranged in correspondence to the direction in which the stirring blade 20 rotates, so that the washing liquid can be discharged from the washing liquid discharge holes 113b with high efficiency, and the treatment target can be recovered through the treatment target discharge hole 113a with high efficiency.

A plurality of washing liquid discharge holes 113b are present, and all of the treatment target discharge hole 113a and the washing liquid discharge holes 113b are arranged so as to have an evenly-spaced central angle around the central axis 11a. In the present embodiment, the one treatment target discharge hole 113a and the three washing liquid discharge holes 113b are arranged so as to have a central angle of 90°. The above-described configuration enables the washing liquid to be discharged from the plurality of washing liquid discharge holes 113b with high efficiency.

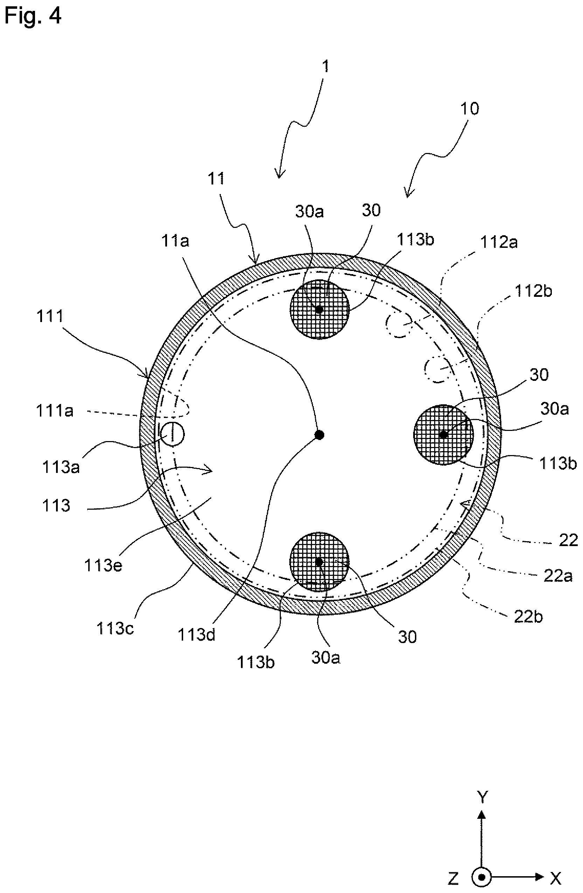

Figure 4 is an XY sectional view of the washing and drying apparatus when viewed from above. As shown in Figure 4, the plurality of washing liquid discharge holes 113b are present, and an opening of the treatment target supply hole 112a at the inner side of the container main body 11 and an opening of the washing liquid supply hole 112b at the inner side of the container main body 11 are located between the washing liquid discharge holes 113b, 113b adjacent to each other in the circumferential direction when viewed in the direction along the central axis 11a. Specifically describing, projections of the respective openings of the treatment target supply hole 112a and the washing liquid supply hole 112b are indicated by dash-double-dot lines. These openings are located between the filters 30, 30 adjacent to each other in the circumferential direction.

The above-described configuration reduces direct dropping of the treatment target and the washing liquid onto the filters 30, the treatment target being supplied from the treatment target supply tube 12 into the container main body 11 and the washing liquid being supplied from the washing liquid supply tube 13 into the container main body 11, which can reduce damage to the filters 30.

As shown in Figure 4, the plurality of washing liquid discharge holes 113b are present, and an inner circumferential trajectory 22a of the fin 22 of the stirring blade 20 traced by rotation of the stirring blade 20 crosses the treatment target discharge hole 113a and the washing liquid discharge holes 113b when viewed in the direction along the central axis 11a. In other words, the inner circumferential trajectory 22a of the fin 22 crosses the filters 30 when viewed in the direction along the central axis 11a. An outer circumferential trajectory 22b of the fin 22 is close to the inner surface 111a of the sidewall part 111.

With the above-described configuration, the fin 22 of the stirring blade 20 passes directly above the treatment target discharge hole 113a and the washing liquid discharge holes 113b while the stirring blade 20 is rotating. This enables the washing liquid dropped from the inner circumferential side of the fin 22 to be recovered effectively through the washing liquid discharge holes 113b, and enables the treatment target dropped from the inner circumferential side of the fin 22 to be recovered effectively through the treatment target discharge hole 113a.

Preferably, the inner circumferential trajectory 22a of the fin 22 crosses the region closer to the outer circumference 113c of the bottom part 113 than to a center 30a of the filter 30 when viewed in the direction along the central axis 11a. This enables the washing liquid dropped from the inner circumferential side of the fin 22 to be recovered more effectively through the washing liquid discharge holes 113b.

### [Washing and Drying Method]

Next, a method for washing and drying the treatment target which is powder and made of a polymeric organic compound with the washing liquid and drying the treatment target will be described.

As shown in Figure 1, the treatment target is supplied from the treatment target supply tube 12 into the container main body 11, and the washing liquid is supplied from the washing liquid supply tube 13 into the container main body 11. The treatment target and the washing liquid may be supplied at different timings or may be supplied simultaneously.

Thereafter, the treatment target is washed with the washing liquid while the stirring blade 20 is being rotated, and the washing liquid is discharged through the filters 30 to separately filter the treatment target and the washing liquid. The first sluice valve 16 and the second sluice valve 17 are closed at the time of washing, and the first sluice valve 16 is closed and the second sluice valve 17 is opened at the time of discharging water. Note that water may be discharged after washing the treatment target, or may be discharged while the treatment target is being washed. In addition, washing and water discharging may be repeated a plurality of times.

Thereafter, the heater 40 is actuated while the stirring blade 20 is being rotated to dry the treatment target. At this time, the first sluice valve 16 and the second sluice valve 17 are closed. At this time, when the decompression device 8 is actuated, the treatment target can be dried at low temperature. Note that the second sluice valve 17 may be opened in the latter half of drying to dry the treatment target while air is being delivered into the container main body 11.

Thereafter, the first sluice valve 16 is opened and the second sluice valve 17 is closed to recover the treatment target through the treatment target discharge tube 14.

The above-described method for washing and drying the treatment target which is powder and made of the polymeric organic compound enables the washing step and the drying step to be performed with a single apparatus without the need to use a washing apparatus and a drying apparatus separately, which can save the space for placing the apparatus. In addition, since the washing step and the drying step can be performed with a single apparatus, there is no need to move the treatment target from a washing apparatus to a drying apparatus, which can reduce a workload.

### <Second Embodiment>

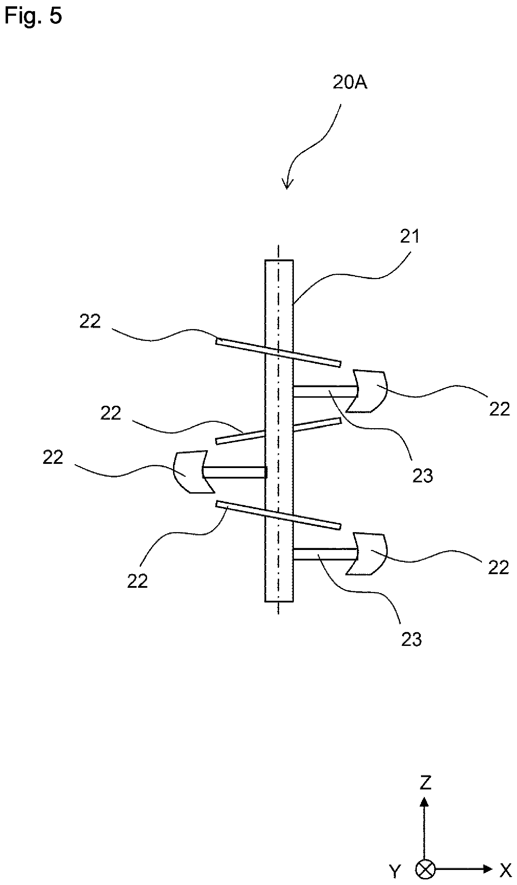

Figure 5 is a schematic configuration diagram of a stirring blade showing a second embodiment of the washing and drying apparatus. As shown in Figure 5, in the washing and drying apparatus of the second embodiment, a stirring blade 20A has the shaft 21 and a plurality of fins 22 wound around the shaft 21 so as to form a discontinuous helix along the shaft 21. Specifically describing, the plurality of supports 23 extending perpendicularly to the shaft center of the shaft 21 are attached to the shaft 21, and the respective fins 22 are supported by the respective supports 23. The fins 22, 22 adjacent to each other in the helical direction are spaced apart.

Note that in order to improve mixing performance, a platelike baffle may be placed on the inner surface 111a of the sidewall part 111 of the container main body 11 toward the central axis 11a.

The above-described configuration can reduce the degree of stirring with the stirring blade 20A as compared with the fin 22 of the first embodiment that forms a continuous helix. The treatment target and the washing liquid can be dropped through a gap between the fins 22, 22 adjacent to each other in the helical direction, which enables the treatment target and the washing liquid to be recovered with high efficiency.

### <Third Embodiment>

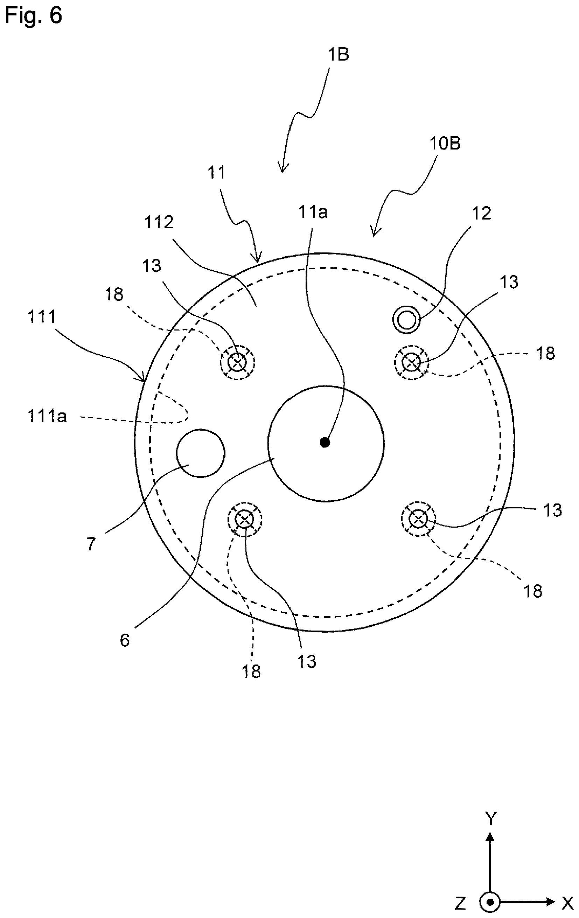

Figure 6 is a top view showing a third embodiment of the washing and drying apparatus. The third embodiment differs from the first embodiment in that a spray nozzle is provided. The different component will be described below. The remaining components are the same as the components of the first embodiment, and are denoted by the same reference numerals as the reference numerals in the first embodiment and description thereof will be omitted.

As shown in Figure 6, in a washing and drying apparatus 1B of the third embodiment, a container 10B has spray nozzles 18 communicating with the washing liquid supply tubes 13 and capable of spraying the washing liquid. Specifically describing, the spray nozzles 18 spread the washing liquid radially. The spray nozzles 18 are attached to an inner surface of the top part 112 at the inner side of the container main body 11. The plurality of washing liquid supply tubes 13 are provided, and the spray nozzles 18 communicate with the respective washing liquid supply tubes 13. In the present embodiment, four of each of the washing liquid supply tubes 13 and the spray nozzles 18 are provided.

The above-described configuration enables the treatment target to be washed while spraying and discharging the washing liquid, so that the container 10B can be made smaller than in the case of storing the washing liquid in the container 10B and washing the treatment target.

Preferably, all of the spray nozzles 18 are arranged so as to have an evenly-spaced central angle around the central axis 11a when viewed in the direction along the central axis 11a of the container main body 11. This enables the washing liquid to be emitted uniformly to all of the regions in the container main body 11 when viewed in the direction along the central axis 11a, which can shorten the washing time and can reduce the quantity of the washing liquid.

Preferably, all of the spray nozzles 18 are arranged at positions at the half of the distance from the central axis 11a to the inner surface 111a of the sidewall part 111 when viewed in the direction along the central axis 11a of the container main body 11. This enables the washing liquid to be emitted more uniformly to all of the regions in the container main body 11 when viewed in the direction along the central axis 11a, which can further shorten the washing time and can further reduce the quantity of the washing liquid.

Note that one spray nozzle 18 may be provided, but it is preferable to provide a plurality of spray nozzles 18. In particular, it is preferable to provide four to six spray nozzles 18, which enables the washing liquid to be emitted uniformly to all of the regions in the container main body 11.

In the above-described embodiments, three washing liquid discharge holes (filters) are present, but at least two washing liquid discharge holes (filters) may be present.
Similarly, three washing liquid discharge tubes are present, but at least one washing liquid discharge tube may be present. In addition, the number of the treatment target supply holes, the washing liquid supply holes, and the treatment target discharge holes may be increased. Similarly, the number of the treatment target supply tubes, the washing liquid supply tubes, and the treatment target discharge tubes may be increased.

In the above-described embodiments, the fin of the stirring blade forms a helix, but may not form a helix, and the number of the fins may be increased and/or decreased. In the above-described embodiments, the heater is provided in the sidewall part and the bottom part, but may further be provided in the top part, or may be provided in at least one of the top part, the sidewall part, and the bottom part.

### <Example 1>

The following shows Example 1 in which the above-described washing and drying apparatus was used to wash a treatment target. A result of Example 1 is shown in Table 1.

**[Table 1]**

| | Capacity of Apparatus | Resin | Washing Method | The Number of Times |
|---|---|---|---|---|
| Example 1 | 100L | ETFE | Washing with Stored Water | 6 |
| Comparative Example | 100L | ETFE | Washing with Stored Water | 6 |

In Example 1, the washing and drying apparatus of the first embodiment was used to wash the treatment target. That is, the washing liquid was retained in the container to wash the treatment target. In addition, ETFE (ethylene-tetrafluoroethylene copolymer) was used as the treatment target.

In Example 1, a 100-L vacuum washing and drying apparatus was used, and 100-mesh filters were used. The apparatus was charged with 25 kg of polymerized, unwashed powder as the treatment target and 25 kg of pure water as the washing liquid. After 30-minute stirring, water was discharged through the filters. This was repeated six times, and the electrical conductivity during the last water discharging was measured. It was confirmed that the electrical conductivity was less than or equal to 50 µS/cm which was a target value.

Specifically describing, after each washing, 10 g of polymer powder was collected and put into a 100-ml screw tube together with 10 ml of pure water. After shaking the screw tube more than or equal to 100 times to sufficiently mix the powder and pure water, pure water was sampled to measure the electrical conductivity of pure water. The powder was washed until it was confirmed that the electrical conductivity became less than or equal to 50 µS/cm which was the target value.

In a comparative example, ETFE was used as the treatment target. In the comparative example, a 6000-L washing and drying apparatus having four plate stirring blades and a baffle was used to wash the treatment target. The container was charged with 1200 kg of polymerized, unwashed powder as the treatment target and 800 kg of pure water as the washing liquid, which were stirred for 60 minutes at sufficient revolutions per minute of stirring such that the powder was caught up in water. After washing by stirring, water was discharged. This was repeated six times. Thereafter, the polymer powder was collected and mixed with pure water, and an electrolyte remaining in the powder was evaluated in terms of electrical conductivity to confirm that the electrical conductivity was less than or equal to 50 µS/cm.

Specifically describing, the polymer powder was collected after each washing, and the powder and pure water were mixed, and pure water was then sampled to measure the electrical conductivity of pure water, similarly to Example 1. The powder was washed until it was confirmed that the electrical conductivity became less than or equal to 50 µS/cm which was the target value.

Both in Example 1 and the comparative example, it was confirmed that the electrical conductivity became less than or equal to 50 µS/cm which was the target value by repeating washing six times. As described above, it was found that Example 1 did not degrade washing capability as compared with the comparative example.

### <Example 2>

The following shows an example about optimum values of the filter size.

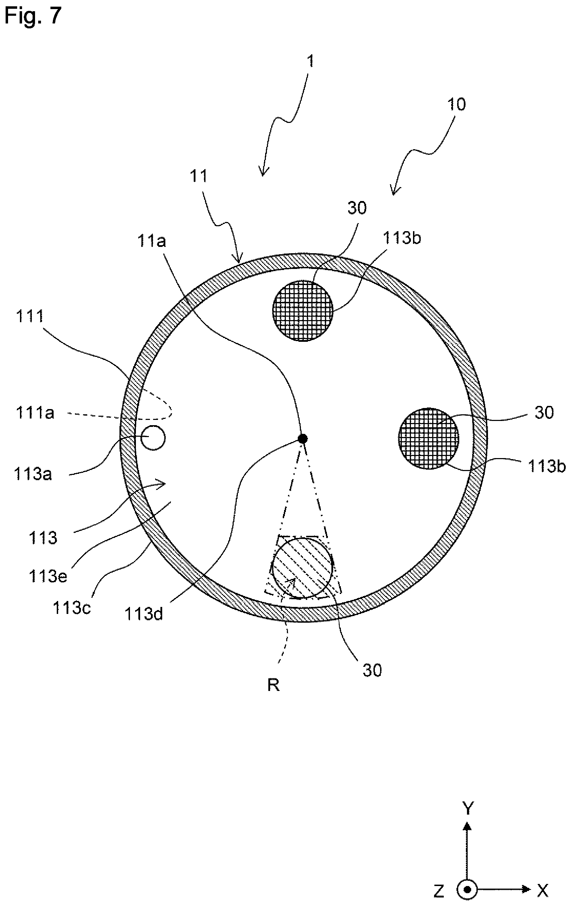

As shown in Figure 7, the container main body 11 with an outer diameter of φ2800 mm was used, and the filters 30 with an outer diameter of φ404 mm were used. The area of the filter 30 was calculated from the outer diameter of the filter 30. The proportion of the area of the filters 30 to the area (hereinafter referred to as the whole area) of the inner surface 113e of the bottom part 113 was calculated as the occupancy rate of the filters 30. Each of the filters 30 thus had an occupancy rate of 2%.

It was assumed that the area of the region R hatched by dotted lines in the drawing was lost for each of the filters 30 as a heat transfer area. The region R shall include the area occupied by a reinforcing component for attaching the filter 30 to the bottom part 113 in addition to the area of the filter 30. Specifically describing, the region R is a region that defines the filter 30 in a sector in which the filter 30 is inscribed and which is indicated by a dash-double-dot line around the central axis 11a. Thus, a value obtained by subtracting the area of the region R of each of the filters 30 from the whole area is referred to as an effective heat transfer area, and the proportion of the effective heat transfer area to the whole area is referred to as an effective heat transfer area rate.

Subsequently, Table 2 shows a relationship among the number of filters, a water discharging time, and a drying time.

**[Table 2]**

| The Number of Filters | Polywater Dehydrating Time | Washing and Dehydrating Time | The Number of Times of Discharging Water | Total Water Discharging Time | Drying Time | Total Time |
|---|---|---|---|---|---|---|
| 3 | 30 mins | 30 mins | 4 | 150 mins | 409 mins | 559 mins |
| 6 | 15 mins | 15 mins | 4 | 75 mins | 449 mins | 524 mins |
| 7 | 13 mins | 13 mins | 4 | 65 mins | 467 mins | 532 mins |

The polywater dehydrating time is a time required for discharging water used when the treatment target is polymerized after transfer to a washing and drying machine. The washing and dehydrating time is a time required for washing the treatment target and discharging water in a single washing step. The number of times of discharging water is the number of times of washing the treatment target and discharging water, and is the number of times of performing the washing step. The total water discharging time is a time required for the whole water discharging, and is obtained by (polywater dehydrating time + washing and dehydrating time × the number of times of discharging water).

The drying time is a time required for drying the treatment target. That is, the drying time is a time required for drying the treatment target after water is discharged.

The total time is a time required for the whole water discharging and drying, and is obtained by (total water discharging time + drying time).

In a case in which the number of filters was six as shown in Table 2, the total time was shorter by 35 minutes than in a case in which the number of filters was three. That is, the total water discharging time was shorter by 75 minutes, and the drying time was longer by 40 minutes. In addition, in a case in which the number of filters was seven, the total time was shorter by 27 minutes than in the case in which the number of filters was three. That is, the total water discharging time was shorter by 85 minutes, and the drying time was longer by 58 minutes. This reveals that an optimum number of filters is six.

In short, a filter having a larger area is more advantageous in terms of water discharging, and a filter having a smaller area is more advantageous for ensuring the heat transfer area in terms of drying.

From the foregoing, six filters and an occupancy rate of 12% (an effective heat transfer area rate of 45%) of the filters were optimum for shortening the total cycle time from a balance between the heat transfer area and water discharging area. Note that in the above-described first embodiment, three filters and a filter occupancy rate of 6% (an effective heat transfer area rate of 68%) were adopted in terms of strength.

Then, optimum values of the size of the filters are such that the occupancy rate of the filters is more than or equal to 2% and less than or equal to 20%, preferably more than or equal to 4% and less than or equal to 16%, and more preferably more than or equal to 6% and less than or equal to 12%. In other words, since a filter has an occupancy rate of 2%, the number of filters is more than or equal to one and less than or equal to ten, preferably more than or equal to two and less than or equal to eight, and more preferably more than or equal to three and less than or equal to six.

This achieves a good balance between the water discharging time and the drying time with the occupancy rate of the filters falling within the above-described range, which can shorten the whole operation time. Note that when the occupancy rate of the filters is smaller than a lower limit value, the water discharging time increases, and when the occupancy rate of the filters is larger than an upper limit value, the drying time increases.

### Reference Signs List

1, 1B washing and drying apparatus
5 control device
6 motor
7 bag filter
8 decompression device
10, 10B container
11 container main body
11a central axis
111 sidewall part
111a inner surface
112 top part
112a treatment target supply hole
112b washing liquid supply hole
113 bottom part
113a treatment target discharge hole
113b washing liquid discharge hole
113c outer circumference
113d center
113e inner surface
12 treatment target supply tube
13 washing liquid supply tube
14 treatment target discharge tube
15 washing liquid discharge tube
16, 17 first and second sluice valves
18 spray nozzle
20, 20A stirring blade
21 shaft
22 fin
22a inner circumferential trajectory
22b outer circumferential trajectory
30 filter
30a center
40 heater
41 pipe
C imaginary circle
R region

## Claims

1. A washing and drying apparatus which is an apparatus capable of washing a treatment target which is powder and made of a polymeric organic compound with a washing liquid and drying the treatment target, the washing and drying apparatus comprising:
a container (10, 10B);
a stirring blade (20, 20B) arranged inside the container and capable of rotating;
filters (30) arranged in the container and capable of separately filtering the treatment target and the washing liquid;
a heater (40) arranged in the container and capable of heating an inside of the container; and
a control device (5) that rotates the stirring blade at a time of washing and a time of drying the treatment target and actuates the heater at the time of drying the treatment target, wherein
the container has a container main body (11), a treatment target supply tube (12) communicating with the inside of the container main body and capable of supplying the treatment target, a washing liquid supply tube (13) communicating with the inside of the container main body and capable of supplying the washing liquid, a treatment target discharge tube (14) communicating with the inside of the container main body and capable of discharging the treatment target, and a washing liquid discharge tube (15) communicating with the inside of the container main body and capable of discharging the washing liquid, and
the filters are provided for the container main body and located at an upstream side of the washing liquid discharge tube,
wherein the container main body has a cylindrical sidewall part (111), a top part (112) attached to a first opening of the sidewall part, and a bottom part (113) attached to a second opening of the sidewall part,
the bottom part has a treatment target discharge hole (113a) communicating with the treatment target discharge tube and a washing liquid discharge hole (113b) communicating with the washing liquid discharge tube,
the treatment target discharge hole (113a) and the washing liquid discharge hole (113b) are arranged in a circumferential direction around a central axis (11a) of the container main body (11) when viewed in a direction along the central axis, wherein,
the washing liquid discharge hole (113b) includes a plurality of washing liquid discharge holes, and the treatment target discharge hole (113a) and the washing liquid discharge holes are arranged so as to have an evenly-spaced central angle around the central axis (11a), and
the filters (30) are attached to openings of the washing liquid discharge holes (113b) at the inner side of the container main body.

2. The washing and drying apparatus according to claim 1, wherein the filters (30) are capable of separately filtering the washing liquid and the treatment target of more than or equal to 50 µm.

3. The washing and drying apparatus according to claim 1 or 2, wherein the stirring blade (20, 20A) is capable of revolving while rotating.

4. The washing and drying apparatus according to any one of claims 1 to 3, further comprising a decompression device (8) capable of decompressing the inside of the container (10, 10B).

5. The washing and drying apparatus according to any one of claims 1 to 4, wherein the container (10, 10B) is capable of retaining the washing liquid at the time of washing.

6. The washing and drying apparatus according to any one of claims 1 to 4, wherein the container (10, 10B) has a spray nozzle (18) communicating with the washing liquid supply tube (13) and capable of spraying the washing liquid.

7. The washing and drying apparatus according to any one of claims 1 to 6, wherein the treatment target is made of resin.

8. The washing and drying apparatus according to any one of claims 1 to 6, wherein the treatment target is made of fluororesin.

9. The washing and drying apparatus according to any one of claims 1 to 8, wherein the treatment target has an average particle size of more than or equal to 20 µm.

10. The washing and drying apparatus according to any one of claims 1 to 9, wherein the filters (30) are arranged in a region closer to an outer circumference (113c) of the bottom part (113).

11. The washing and drying apparatus according to claim 10, wherein part of the heater (40) is arranged in a region closer to a center (113d) of the bottom part (113).

12. The washing and drying apparatus according to any one of claims 1 to 11, wherein an inner surface (111a) of the bottom part (113) at an inner side of the container main body (11) is flat, and the filters (30) are provided on the inner surface.

13. The washing and drying apparatus according to any one of claims 1 to 12, wherein
the top part (112) has a treatment target supply hole (112a) communicating with the treatment target supply tube (12) and a washing liquid supply hole (112b) communicating with the washing liquid supply tube (13), and
an opening of the treatment target supply hole (112a) at the inner side of the container main body (11) and an opening of the washing liquid supply hole (112b) at the inner side of the container main body (11) are located between any washing liquid discharge holes adjacent to each other in the circumferential direction among the washing liquid discharge holes when viewed in the direction along the central axis (11a).

14. The washing and drying apparatus according to any one of claims 1 to 13, wherein the stirring blade (20, 20A) has a shaft (21) and a fin (22) wound around the shaft so as to form a continuous helix along the shaft.

15. The washing and drying apparatus according to claim 16 and any one of claims 1 to 13, wherein
an inner circumferential trajectory (22a) of the fin (22) of the stirring blade (20, 20A) traced by rotation of the stirring blade crosses the treatment target discharge hole (113a) and the washing liquid discharge holes (113b) when viewed in the direction along the central axis (11a).

16. The washing and drying apparatus according to any one of claims 1 to 13, wherein the stirring blade (20A) has a shaft (21) and a plurality of fins (22) wound around the shaft so as to form a discontinuous helix along the shaft.

17. A method for washing and drying a treatment target which is powder and made of a polymeric organic compound, comprising:
washing a treatment target which is powder and made of a polymeric organic compound with a washing liquid while rotating a stirring blade (20, 20A) in a container main body (11) and discharging the washing liquid from a washing liquid discharge tube (15) communicating with the washing liquid discharge hole (113b) through filters (30) to separately filter the treatment target and the washing liquid; and
actuating a heater (40) while rotating the stirring blade to dry the treatment target and discharging the treatment target from a treatment target discharge tube (14) communicating with a treatment target discharge hole (113a) of a bottom part (113) of the container main body, wherein
the treatment target discharge hole (113a) and the washing liquid discharge hole (113b) are arranged in a circumferential direction around a central axis (11a) of the container main body (11) when viewed in a direction along the central axis, wherein,
the washing liquid discharge hole (113b) includes a plurality of washing liquid discharge holes, and the treatment target discharge hole (113a) and the washing liquid discharge holes are arranged so as to have an evenly-spaced central angle around the central axis (11a),
wherein
the filters (30) are attached to openings of the washing liquid discharge holes (113b) at the inner side of the container main body,
wherein
the container main body has a cylindrical sidewall part, a top part attached to a first opening of the sidewall part, and a bottom part attached to a second opening of the sidewall part.

## Patentansprüche

1. Wasch- und Trockeneinrichtung, die eine Einrichtung ist, die imstande ist, ein Behandlungsziel, das Pulver ist und aus einer organischen polymeren Verbindung hergestellt ist, mit einer Waschflüssigkeit zu waschen und das Behandlungsziel zu trocknen, wobei die Wasch- und Trockeneinrichtung Folgendes umfasst:
einen Behälter (10, 10B);
ein Rührblatt (20, 20B), das innerhalb des Behälters angeordnet ist und imstande ist, zu rotieren;
Filter (30), die im Behälter angeordnet sind und imstande sind, das Behandlungsziel und die Waschflüssigkeit getrennt zu filtern;
ein Heizelement (40), das im Behälter angeordnet ist und imstande ist, das Innere des Behälters zu erhitzen; und
eine Steuervorrichtung (5), die das Rührblatt zu einem Zeitpunkt des Waschens und einem Zeitpunkt des Trocknens des Behandlungsziels dreht und das Heizelement zu dem Zeitpunkt des Trocknens des Behandlungsziels betätigt, wobei
der Behälter einen Behälterhauptteil (11), ein Behandlungszielzuführrohr (12), das mit dem Inneren des Behälterhauptteils kommuniziert und imstande ist, das Behandlungsziel zuzuführen, ein Waschflüssigkeitszuführrohr (13), das mit dem Inneren des Behälterhauptteils kommuniziert und imstande ist, die Waschflüssigkeit zuzuführen, ein Behandlungszielabführrohr (14), das mit dem Inneren des Behälterhauptteils kommuniziert und imstande ist, das Behandlungsziel abzuführen, und ein Waschflüssigkeitsabführrohr (15), das mit dem Inneren des Behälterhauptteils kommuniziert und imstande ist, die Waschflüssigkeit abzuführen, aufweist, und
die Filter für den Behälterhauptteil bereitgestellt sind und stromaufwärts des Waschflüssigkeitsabführrohrs angeordnet sind,
wobei der Behälterhauptteil einen zylindrischen Seitenwandabschnitt (111), einen Deckelabschnitt (112), der an einer ersten Öffnung des Seitenwandabschnitts angebracht ist, und einen Bodenabschnitt (113), der an einer zweiten Öffnung des Seitenwandabschnitts angebracht ist, aufweist,
der Bodenabschnitt eine Behandlungszielabführbohrung (113a), die mit dem Behandlungszielabführrohr kommuniziert, und eine Waschflüssigkeitsabführbohrung (113b), die mit dem Waschflüssigkeitsabführrohr kommuniziert, aufweist,
die Behandlungszielabführbohrung (113a) und die Waschflüssigkeitsabführbohrung (113b) in einer Umfangsrichtung um eine Mittelachse (11a) des Behälterhauptteils (11) angeordnet sind, wenn sie in einer Richtung entlang der Mittelachse betrachtet werden, wobei
die Waschflüssigkeitsabführbohrung (113b) eine Vielzahl von Waschflüssigkeitsabführbohrungen einschließt, und die Behandlungszielabführbohrung (113a) und die Waschflüssigkeitsabführbohrungen so angeordnet sind, dass sie einen abstandsgleichen Mittelpunktswinkel um die Mittelachse (11a) aufweisen, und
die Filter (30) an Öffnungen der Waschflüssigkeitsabführbohrungen (113b) an der Innenseite des Behälterhauptteils angebracht sind.

2. Wasch- und Trockeneinrichtung nach Anspruch 1, wobei die Filter (30) imstande sind, die Waschflüssigkeit und ein Behandlungsziel mit einer Partikelgröße von größer oder gleich 50 µm getrennt zu filtern.

3. Wasch- und Trockeneinrichtung nach Anspruch 1 oder 2, wobei das Rührblatt (20, 20A) imstande ist, während des Rotierens rundzulaufen.

4. Wasch- und Trockeneinrichtung nach einem der Ansprüche 1 bis 3, die weiter eine Dekompressionsvorrichtung (8) umfasst, die imstande ist, das Innere des Behälters (10, 10B) zu dekomprimieren.

5. Wasch- und Trockeneinrichtung nach einem der Ansprüche 1 bis 4, wobei der Behälter (10, 10B) imstande ist, die Waschflüssigkeit zu dem Zeitpunkt des Waschens zurückzuhalten.

6. Wasch- und Trockeneinrichtung nach einem der Ansprüche 1 bis 4, wobei der Behälter (10, 10B) eine Sprühdüse (18) aufweist, die mit dem Waschflüssigkeitszuführrohr (13) kommuniziert und imstande ist, die Waschflüssigkeit zu versprühen.

7. Wasch- und Trockeneinrichtung nach einem der Ansprüche 1 bis 6, wobei das Behandlungsziel aus Harz hergestellt ist.

8. Wasch- und Trockeneinrichtung nach einem der Ansprüche 1 bis 6, wobei das Behandlungsziel aus Fluorharz hergestellt ist.

9. Wasch- und Trockeneinrichtung nach einem der Ansprüche 1 bis 8, wobei das Behandlungsziel eine mittlere Partikelgröße von größer oder gleich 20 µm aufweist.

10. Wasch- und Trockeneinrichtung nach einem der Ansprüche 1 bis 9, wobei die Filter (30) in einem Bereich angeordnet sind, der näher an einem Außenumfang (113c) des Bodenabschnitts (113) liegt.

11. Wasch- und Trockeneinrichtung nach Anspruch 10, wobei ein Teil des Heizelements (40) in einem Bereich angeordnet ist, der näher an einer Mitte (113d) des Bodenabschnitts (113) liegt.

12. Wasch- und Trockeneinrichtung nach einem der Ansprüche 1 bis 11, wobei eine Innenfläche (111a) des Bodenabschnitts (113) an einer Innenseite des Behälterhauptteils (11) flach ist, und die Filter (30) auf der Innenfläche bereitgestellt sind.

13. Wasch- und Trockeneinrichtung nach einem der Ansprüche 1 bis 12, wobei
der Deckelabschnitt (112) eine Behandlungszielzuführbohrung (112a), die mit dem Behandlungszielzuführrohr (12) kommuniziert, und eine Waschflüssigkeitszuführbohrung (112b), die mit dem Waschflüssigkeitszuführrohr (13) kommuniziert, aufweist, und
eine Öffnung der Behandlungszielzuführbohrung (112a) an der Innenseite des Behälterhauptteils (11) und eine Öffnung der Waschflüssigkeitszuführbohrung (112b) an der Innenseite des Behälterhauptteils (11) zwischen beliebigen in der Umfangsrichtung zueinander benachbarten Waschflüssigkeitsabführbohrungen unter den Waschflüssigkeitsabführbohrungen angeordnet sind, wenn sie in der Richtung entlang der Mittelachse (11a) betrachtet werden.

14. Wasch- und Trockeneinrichtung nach einem der Ansprüche 1 bis 13, wobei das Rührblatt (20, 20A) eine Welle (21) und einen Rührflügel (22) aufweist, der um die Welle gewickelt ist, um entlang der Welle eine kontinuierliche Helix zu bilden.

15. Wasch- und Trockeneinrichtung nach Anspruch 16 und einem der Ansprüche 1 bis 13, wobei
eine innere Umfangsbahn (22a) des Rührflügels (22) des Rührblatts (20, 20A), die durch Rotation des Rührblatts nachgezeichnet wird, die Behandlungszielabführbohrung (113a) und die Waschflüssigkeitsabführbohrungen (113b) kreuzt, wenn sie in der Richtung entlang der Mittelachse (11a) betrachtet wird.

16. Wasch- und Trockeneinrichtung nach einem der Ansprüche 1 bis 13, wobei das Rührblatt (20A) eine Welle (21) und eine Vielzahl von Rührflügeln (22) aufweist, die um die Welle gewickelt sind, um entlang der Welle eine diskontinuierliche Helix zu bilden.

17. Verfahren zum Waschen und Trocknen eines Behandlungsziels, das Pulver ist und aus einer organischen polymeren Verbindung hergestellt ist, umfassend:
Waschen eines Behandlungsziels, das Pulver ist und aus einer organischen polymeren Verbindung hergestellt ist, mit einer Waschflüssigkeit, während ein Rührblatt (20, 20A) in einem Behälterhauptteil (11) rotiert wird, und Abführen der Waschflüssigkeit aus einem Waschflüssigkeitsabführrohr (15), das mit der Waschflüssigkeitsabführbohrung (113b) kommuniziert, durch Filter (30), um das Behandlungsziel und die Waschflüssigkeit getrennt zu filtern; und
Betätigen eines Heizelements (40), während das Rührblatt rotiert wird, um das Behandlungsziel zu trocknen, und Abführen des Behandlungsziels aus einem Behandlungszielabführrohr (14), das mit einer Behandlungszielabführbohrung (113a) eines Bodenabschnitts (113) des Behälterhauptteils kommuniziert, wobei
die Behandlungszielabführbohrung (113a) und die Waschflüssigkeitsabführbohrung (113b) in einer Umfangsrichtung um eine Mittelachse (11a) des Behälterhauptteils (11) angeordnet sind, wenn sie in einer Richtung entlang der Mittelachse betrachtet werden, wobei
die Waschflüssigkeitsabführbohrung (113b) eine Vielzahl von Waschflüssigkeitsabführbohrungen einschließt, und die Behandlungszielabführbohrung (113a) und die Waschflüssigkeitsabführbohrungen so angeordnet sind, dass sie einen abstandsgleichen Mittelpunktswinkel um die Mittelachse (11a) aufweisen, wobei
die Filter (30) an Öffnungen der Waschflüssigkeitsabführbohrungen (113b) an der Innenseite des Behälterhauptteils angebracht sind, wobei
der Behälterhauptteil einen zylindrischen Seitenwandabschnitt, einen Deckelabschnitt, der an einer ersten Öffnung des Seitenwandabschnitts angebracht ist, und einen Bodenabschnitt, der an einer zweiten Öffnung des Seitenwandabschnitts angebracht ist, aufweist.

## Revendications

1. Appareil de lavage et séchage qui est un appareil apte à laver avec un liquide de lavage un objet à traiter, qui est une poudre et qui est constitué d'un composé organique polymère, et à sécher l'objet à traiter, l'appareil de lavage et séchage comprenant :
un récipient (10, 10B) ;
une lame d'agitation (20, 20B) agencée à l'intérieur du récipient et apte à tourner ;
des filtres (30) agencés dans le récipient et aptes à filtrer séparément l'objet à traiter et le liquide de lavage ;
un dispositif de chauffage (40) agencé dans le récipient et apte à chauffer l'intérieur du récipient ; et
un dispositif de commande (5) qui fait tourner la lame d'agitation au moment du lavage et au moment du séchage de l'objet à traiter et qui actionne le dispositif de chauffage au moment du séchage de l'objet à traiter, dans lequel
le récipient présente un corps principal de récipient (11), un tube (12) d'alimentation en objet à traiter communiquant avec l'intérieur du corps principal de récipient et apte à alimenter en objet à traiter, un tube (13) d'alimentation en liquide de lavage communiquant avec l'intérieur du corps principal de récipient et apte à alimenter en liquide de lavage, un tube (14) d'évacuation d'objet à traiter communiquant avec l'intérieur du corps principal de récipient et apte à évacuer l'objet à traiter, et un tube (15) d'évacuation de liquide de lavage communiquant avec l'intérieur du corps principal de récipient et apte à évacuer le liquide de lavage, et
les filtres sont prévus pour le corps principal de récipient et sont situés du côté amont du tube d'évacuation de liquide de lavage,
dans lequel le corps principal de récipient présente une partie de paroi latérale (111) cylindrique, une partie supérieure (112) fixée à une première ouverture de la partie de paroi latérale, et une partie inférieure (113) fixée à une deuxième ouverture de la partie de paroi latérale,
la partie inférieure présente un orifice (113a) d'évacuation d'objet à traiter communiquant avec le tube d'évacuation d'objet à traiter et un orifice (113b) d'évacuation de liquide de lavage communiquant avec le tube d'évacuation de liquide de lavage,
l'orifice (113a) d'évacuation d'objet à traiter et l'orifice (113b) d'évacuation de liquide de lavage sont agencés dans une direction circonférentielle autour d'un axe central (11a) du corps principal de récipient (11) lorsqu'ils sont vus dans une direction allant selon l'axe central, dans lequel
l'orifice (113b) d'évacuation de liquide de lavage inclut une pluralité d'orifices d'évacuation de liquide de lavage, et l'orifice (113a) d'évacuation d'objet à traiter et les orifices d'évacuation de liquide de lavage sont agencés de manière à présenter un angle central à espacement régulier autour de l'axe central (11a), et
les filtres (30) sont fixés à des ouvertures des orifices (113b) d'évacuation de liquide de lavage du côté interne du corps principal de récipient.

2. Appareil de lavage et séchage selon la revendication 1, dans lequel les filtres (30) sont aptes à filtrer séparément le liquide de lavage et l'objet à traiter d'une taille supérieure ou égale à 50 µm.

3. Appareil de lavage et séchage selon la revendication 1 ou la revendication 2, dans lequel la lame d'agitation (20, 20A) est apte à être en révolution tout en tournant.

4. Appareil de lavage et séchage selon l'une quelconque des revendications 1 à 3, comprenant en outre un dispositif de décompression (8) apte à décomprimer l'intérieur du récipient (10, 10B).

5. Appareil de lavage et séchage selon l'une quelconque des revendications 1 à 4, dans lequel le récipient (10, 10B) est apte à retenir le liquide de lavage au moment du lavage.

6. Appareil de lavage et séchage selon l'une quelconque des revendications 1 à 4, dans lequel le récipient (10, 10B) présente une buse de pulvérisation (18) communiquant avec le tube (13) d'alimentation en liquide de lavage et apte à pulvériser le liquide de lavage.

7. Appareil de lavage et séchage selon l'une quelconque des revendications 1 à 6, dans lequel l'objet à traiter est constitué de résine.

8. Appareil de lavage et séchage selon l'une quelconque des revendications 1 à 6, dans lequel l'objet à traiter est constitué de fluororésine.

9. Appareil de lavage et séchage selon l'une quelconque des revendications 1 à 8, dans lequel l'objet à traiter présente une taille moyenne de particules supérieure ou égale à 20 µm.

10. Appareil de lavage et séchage selon l'une quelconque des revendications 1 à 9, dans lequel les filtres (30) sont agencés dans une zone plus proche d'une circonférence externe (113c) de la partie inférieure (113).

11. Appareil de lavage et séchage selon la revendication 10, dans lequel une partie du dispositif de chauffage (40) est agencée dans une zone plus proche d'un centre (113d) de la partie inférieure (113).

12. Appareil de lavage et séchage selon l'une quelconque des revendications 1 à 11, dans lequel une surface intérieure (111a) de la partie inférieure (113) du côté interne du corps principal de récipient (11) est plane, et les filtres (30) sont situés sur la surface intérieure.

13. Appareil de lavage et séchage selon l'une quelconque des revendications 1 à 12, dans lequel
la partie supérieure (112) présente un orifice (112a) d'alimentation en objet à traiter communiquant avec le tube (12) d'alimentation en objet à traiter et un orifice (112b) d'alimentation en liquide de lavage communiquant avec le tube (13) d'alimentation en liquide de lavage, et
une ouverture de l'orifice (112a) d'alimentation en objet à traiter du côté interne du corps principal de récipient (11) et une ouverture de l'orifice (112b) d'alimentation en liquide de lavage du côté interne du corps principal de récipient (11) sont situées entre des orifices d'évacuation de liquide de lavage quelconques adjacents l'un à l'autre dans la direction circonférentielle parmi les orifices d'évacuation de liquide de lavage lorsqu'ils sont vus dans la direction allant selon l'axe central (11a).

14. Appareil de lavage et séchage selon l'une quelconque des revendications 1 à 13, dans lequel la lame d'agitation (20, 20A) présente un arbre (21) et une ailette (22) enroulée autour de l'arbre de manière à former une hélice continue le long de l'arbre.

15. Appareil de lavage et séchage selon la revendication 16 et l'une quelconque des revendications 1 à 13, dans lequel
une trajectoire circonférentielle interne (22a) de l'ailette (22) de la lame d'agitation (20, 20A) tracée par la rotation de la lame d'agitation croise l'orifice (113a) d'évacuation d'objet à traiter et les orifices (113b) d'évacuation de liquide de lavage lorsqu'elle est vue dans la direction allant selon l'axe central (11a).

16. Appareil de lavage et séchage selon l'une quelconque des revendications 1 à 13, dans lequel la lame d'agitation (20A) présente un arbre (21) et une pluralité d'ailettes (22) enroulées autour de l'arbre de manière à former une hélice discontinue le long de l'arbre.

17. Procédé de lavage et séchage d'un objet à traiter, qui est une poudre et qui est constitué d'un composé organique polymère, comprenant :
le lavage avec un liquide de lavage d'un objet à traiter, qui est une poudre et qui est constitué d'un composé organique polymère, tout en faisant tourner une lame d'agitation (20, 20A) dans un corps principal de récipient (11) et en évacuant le liquide de lavage depuis un tube (15) d'évacuation de liquide de lavage communiquant avec l'orifice (113b) d'évacuation de liquide de lavage à travers des filtres (30), de manière à filtrer séparément l'objet à traiter et le liquide de lavage ; et
l'actionnement d'un dispositif de chauffage (40) tout en faisant tourner la lame d'agitation, de manière à sécher l'objet à traiter et à évacuer l'objet à traiter depuis un tube (14) d'évacuation d'objet à traiter communiquant avec un orifice (113a) d'évacuation d'objet à traiter d'une partie inférieure (113) du corps principal de récipient, dans lequel
l'orifice (113a) d'évacuation d'objet à traiter et l'orifice (113b) d'évacuation de liquide de lavage sont agencés dans une direction circonférentielle autour d'un axe central (11a) du corps principal de récipient (11) lorsqu'ils sont vus dans une direction allant selon l'axe central, dans lequel
l'orifice (113b) d'évacuation de liquide de lavage inclut une pluralité d'orifices d'évacuation de liquide de lavage, et l'orifice (113a) d'évacuation d'objet à traiter et les orifices d'évacuation de liquide de lavage sont agencés de manière à présenter un angle central à espacement régulier autour de l'axe central (11a), dans lequel
les filtres (30) sont fixés à des ouvertures des orifices (113b) d'évacuation de liquide de lavage du côté interne du corps principal de récipient, dans lequel
le corps principal de récipient présente une partie de paroi latérale cylindrique, une partie supérieure fixée à une première ouverture de la partie de paroi latérale, et une partie inférieure fixée à une deuxième ouverture de la partie de paroi latérale.
